(19) Europäisches Patentamt
European Patent Office
Office européen des brevets

(11) **EP 4 169 720 A1**

(12) **EUROPÄISCHE PATENTANMELDUNG**

(43) Veröffentlichungstag:
**26.04.2023 Patentblatt 2023/17**

(21) Anmeldenummer: **21204388.9**

(22) Anmeldetag: **25.10.2021**

(51) Internationale Patentklassifikation (IPC):
**B41F 33/00** (2006.01)    **G06T 7/00** (2017.01)
**G06T 7/33** (2017.01)

(52) Gemeinsame Patentklassifikation (CPC):
**B41F 33/0036; G06T 7/001; G06T 7/33;**
B41P 2233/10; G06T 2207/10008;
G06T 2207/10016; G06T 2207/30144;
G06T 2207/30176

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **BST GmbH**
**33729 Bielefeld (DE)**

(72) Erfinder:
• **LOHMEIER, Christian**
**33729 Bielefeld (DE)**
• **van Pels, Oliver**
**33729 Bielefeld (DE)**
• **Kohl, Ulrich**
**33729 Bielefeld (DE)**

(74) Vertreter: **Ter Meer Steinmeister & Partner
Patentanwälte mbB
Artur-Ladebeck-Strasse 51
33617 Bielefeld (DE)**

(54) **VERFAHREN ZUR DRUCKBILDINSPEKTION IN EINEM DIGITALEN DRUCKPROZESS**

(57)    Verfahren zur Druckbildinspektion in einem digitalen Druckprozess, bei dem Bilddaten von zu druckenden Bildern in einer Druckvorstufe in der Form eines digitalen Proofs vorliegen, mit den Schritten:
- Erzeugen eines Referenzbildes, das das gewünschte Druckergebnis repräsentiert,
- Aufnehmen von digitalen Livebildern (10') von gedruckten Bildern, und
- Vergleichen der Livebilder mit dem Referenzbild,
dadurch gekennzeichnet, dass das Verfahren die weiteren Schritte aufweist:
vor Druckbeginn:
- Durchsuchen (S1) des digitalen Proofs nach markanten Punkten in dem zu druckenden Bild,
- Auswählen (S2) einer Anzahl solcher Punkte als Referenzpunkte und Bestimmen von Koordinaten der Referenzpunkte in einem Proof-Koordinatensystem
- Rendern (S3) des digitalen Proofs und Speichern des gerenderten Bildes als Referenzbild,

nach Druckbeginn, für jedes Livebild:
- Aufsuchen (S6) der Referenzpunkte in dem Livebild,
- Berechnen (S6) einer Koordinatentransformation, die die Referenzpunkte des Livebildes und des Referenzbildes ineinander überführt, und
- Vergleichen (S8) des Livebildes mit dem Referenzbild nach Anwendung (S7) der Koordinatentransformation.

Fig. 6

**Beschreibung**

Die Erfindung betrifft ein Verfahren zur Druckbildinspektion in einem digitalen Druckprozess, bei dem Bilddaten von zu druckenden Bildern in einer Druckvorstufe in der Form eines digitalen Proofs vorliegen, mit den Schritten:

- Erzeugen eines Referenzbildes, das das gewünschte Druckergebnis repräsentiert,
- Aufnehmen von digitalen Livebildern von gedruckten Bildern, und
- Vergleichen der Livebilder mit dem Referenzbild.

Mit Hilfe eines solchen Inspektionsverfahrens sollen etwaige Fehler im Druckprozess frühzeitig erkannt werden, so dass bei Auftreten eines Fehlers der Druckprozess abgebrochen werden kann oder andere geeignete Gegenmaßnahmen getroffen werden können, bevor eine große Menge an unbrauchbaren Drucken produziert wurde.

Aus EP 2 700 505 B1 ist ein Verfahren zur Druckbildinspektion in einem Rotationsdruckprozess bekannt, bei dem das Referenzbild dadurch gewonnen wird, dass in der Andruckphase zu Beginn des Druckprozesses digitale Bilder der auf die Bedruckstoffbahn gedruckten Formate aufgenommen werden und dann eine gewisse Anzahl dieser digitalen Bilder elektronisch überlagert werden, so dass man als Referenzbild ein gemitteltes Bild erhält, in dem geringere statistische Fluktuationen auftreten als in einem einzelnen Livebild. Um die Produktion von Ausschuss zu minimieren, wird bei diesem Verfahren bereits eines der Livebilder, die zur Berechnung des Referenzbildes herangezogen wurden, mit einem digitalen Proof verglichen, der das gewünschte Druckergebnis spezifiziert. So können grobe Abweichungen bereits in einer sehr frühen Phase festgestellt werden, bevor genügend Livebilder für die Erzeugung des Referenzbildes vorliegen.

Dieses Inspektionsverfahren wäre in gleicher Form auch bei einem digitalen Druckprozess einsetzbar.

Aufgabe der Erfindung ist es, ein Verfahren anzugeben, durch das die Produktion von Ausschuss weiter verringert werden kann.

Diese Aufgabe wird erfindungsgemäß durch ein Verfahren mit den folgenden Schritten gelöst:

vor Druckbeginn:

- Durchsuchen des digitalen Proofs nach markanten Punkten in dem zu druckenden Bild,
- Auswählen einer Anzahl solcher Punkte als Referenzpunkte und Bestimmen von Koordinaten der Referenzpunkte in einem Proof-Koordinatensystem,
- Rendern des digitalen Proofs und Speichern des gerenderten Bildes als Referenzbild,

nach Druckbeginn, für jedes Livebild:

- Aufsuchen der Referenzpunkte in dem Livebild,
- Berechnen einer Koordinatentransformation, die die Referenzpunkte des Livebildes und des Referenzbildes in einander überführt, und
- Vergleichen des Livebildes mit dem Referenzbild nach Anwendung der Koordinatentransformation.

Bei dem erfindungsgemäßen Verfahren wird somit das Referenzbild bereits zu einem Zeitpunkt vor Druckbeginn erzeugt, bevor überhaupt ein erstes gedrucktes Bild vorliegt, von dem ein Livebild aufgenommen werden könnte. So kann die Inspektion durch Vergleich der Druckerzeugnisse mit einem qualitativ hochwertigem Referenzbild praktisch schon beim ersten gedruckten Bild beginnen.

In der Praxis besteht jedoch das Problem, dass während des Druckprozesses gewisse Bildverzerrungen auftreten, beispielsweise durch Ungenauigkeiten bei der Bahnlaufregelung, durch zugspannungsbedingte Reckung des Bedruckstoffmaterials, und dergleichen. Die Verzerrungen führen dazu, dass jedes Livebild etwas von dem Referenzbild abweicht, so dass ein unmittelbarer Vergleich nicht möglich ist bzw. dazu führen würde, dass jedes gedruckte Bild als fehlerhaft verworfen würde. Diese Verzerrungen werden bei dem erfindungsgemäßen Verfahren rechnerisch kompensiert, indem man schon vor Druckbeginn gewisse Referenzpunkte in dem zu druckenden Bild auswählt, die markant hervortreten und gut lokalisierbar sind. Die gleichen Referenzpunkte werden dann auch während des Druckprozesses in jedem Livebild aufgesucht, so dass es möglich ist, durch Vergleich der Positionen der Referenzpunkte im Proof und im Livebild die Verzerrungen zu erkennen und durch eine geeignete Koordinatentransformation zu korrigieren. Auf diese Weise wird jedes Livebild auf ganzer Fläche mit dem Referenzbild zur Deckung gebracht, so dass alle dann noch verbleibenden Abweichungen auf echte Fehler im Druckprozess hinweisen. Im Idealfall, wenn das gedruckte Bild vollkommen fehlerfrei ist, sollte man ein Bild völlig ohne Bildinhalt erhalten, wenn nach der Entzerrung das Livebild digital vom Referenzbild subtrahiert wird.

Die Entzerrung kann dabei entweder dadurch erfolgen, dass eine Koordinatentransformation auf das Livebild angewandt wird und das transformierte Livebild dann mit dem Referenzbild verglichen wird, oder dadurch, dass eine inverse Koordinatentransformation auf das Referenzbild angewandt wird und dann das transformierte Referenzbild mit dem jeweiligen Livebild verglichen wird.

Die zum Entzerren notwendige Koordinatentransformation kann mit Hilfe spezialisierter Grafikprozessoren, wie sie auch für Computerspiele benutzt werden, sehr schnell ausgeführt werden. Die zeitraubenderen Berechnungen, die zum Rendern des Referenzbildes sowie für eine sorgfältige Auswahl der Referenzpunkte im digitalen Proof erforderlich sind, werden bereits vor Druckbeginn ausgeführt, so dass die Produktivität des Druckprozesses dadurch nicht beschränkt wird, zumal diese vorbereitenden Berechnungen bereits durchgeführt werden können, während auf der Druckmaschine noch ein vorangehender Druckprozess läuft.

Im folgenden wird ein Ausführungsbeispiel anhand der Zeichnungen näher erläutert.

Es zeigen:

Fig. 1    eine schematisierte Darstellung eines digitalen Proofs für ein gewünschtes Druckerzeugnis;

Fig. 2    eine übertriebene grafische Darstellung von Verzerrungen eines gedruckten Bildes;

Fig. 3    ein Netz von Referenzpunkten des digitalen Proofs, überlagert mit entsprechenden Referenzpunkten eines verzerrten Livebildes;

Fig. 4    eine Detailvergrößerung zu Fig. 3;

Fig. 5    eine schematische Darstellung eines Abschnitts einer bedruckten Bedruckstoffbahn; und

Fig. 6    ein Flussdiagramm zur Erläuterung des erfindungsgemäßen Verfahrens.

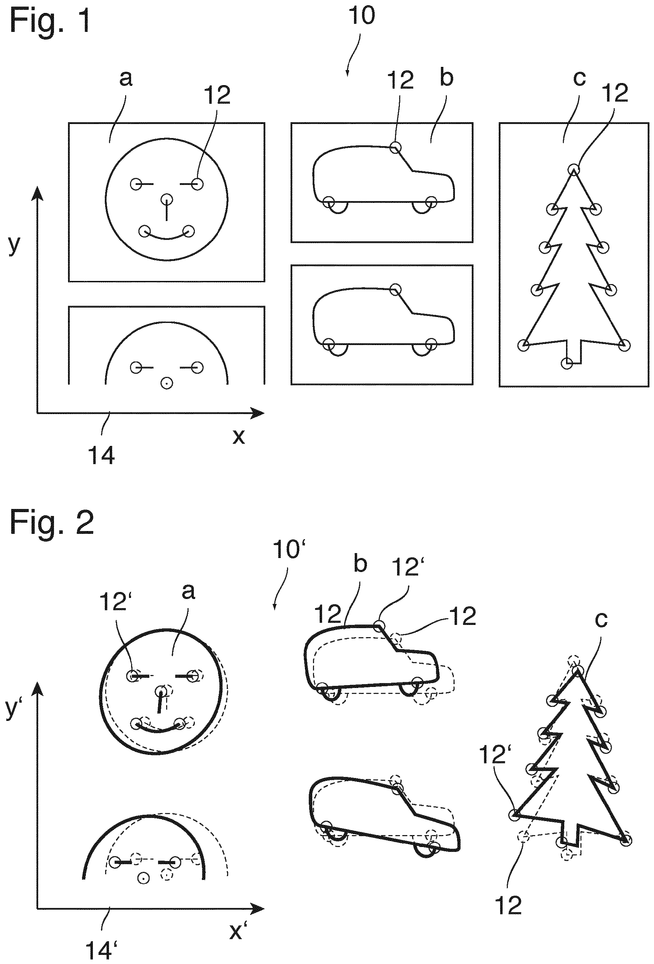

In Fig. 1 ist schematisch ein digitaler Proof 10 gezeigt, der als Vorlage für ein Druckerzeugnis in der Form einer endlosen bedruckten Bahn dient. Bei dem Proof handelt es sich nicht um ein Rasterbild, sondern um eine Datei in einem standardisierten Format, beispielsweise PDF, die die Bildinformation in komprimierter Form enthält. Für den Druckprozess muss der Proof gerendert werden, d. h., durch Rasterbildverarbeitung in ein Bildformat (Bitmap) umgewandelt werden, in dem die Bildinformation für jedes Pixel durch digitale Dichte- und/oder Farbwerte angegeben ist, die dann in einem digitalen Druckgerät, beispielsweise einem Hochleistungs-Tintenstrahldrucker, unmittelbar als Steuersignale für die druckenden Elemente verwendet werden können.

Im gezeigten Beispiel enthält der Proof 10 drei verschiedene Motive a, b und c, die in drei parallelen Spuren auf die Bedruckstoffbahn gedruckt werden sollen. Die Motive unterscheiden sich in ihrem Repeat, d. h. in der Länge in Laufrichtung der Bedruckstoffbahn. Im gezeigten Beispiel definiert der Proof 10 ein Druckbild, dessen Breite der Breite der Bedruckstoffbahn entspricht und dessen Länge dem Repeat des längsten Motivs c entspricht. Das Motiv b ist in diesem Druckbild zweimal vollständig enthalten, während das Motiv a nur einmal vollständig und noch einmal unvollständig enthalten ist. Zum Bedrucken des anschließenden Abschnitts der Bedruckstoffbahn wird dann ein weiterer Proof benötigt, der unter anderem den in Fig. 1 fehlenden Teil der zweiten Kopie des Motivs a enthält. Im Prinzip, wenn die Repeats der Motive c, b und c nicht in einem rationalen Verhältnis (das sich durch kleine ganze Zahlen ausdrücken lässt) zueinander stehen, wird für jeden Abschnitt der Bedruckstoffbahn ein anderer Proof benötigt. In der Praxis wird man deshalb zumeist anstreben, die Motive so anzuordnen, dass der Proof nur vollständige Motive enthält, deren Anordnung sich periodisch wiederholt, so dass für den gesamten Druckprozess nur ein einziger Proof gerendert zu werden braucht.

Fig. 2 zeigt ein sogenanntes Livebild 10', d.h., ein digitales Abbild des auf die Bedruckstoffbahn gedruckten Bildes. Bei dem physikalischen Druckprozess kommt es unvermeidlich zu gewissen Bildverzerrungen, so dass das Aussehen der gedruckten Motive etwas vom Aussehen der Motive im Proof abweicht, wie in Fig. 2 übertrieben dargestellt ist. Wenn man die Qualität des Druckerzeugnisses mit Hilfe eines elektronischen Inspektionsverfahrens überprüfen will, so benötigt man ein Referenzbild, das die gleichen Verzerrungen aufweist wie das gedruckte Bild. Nur dann ist es möglich, das Livebild des tatsächlich gedruckten Bildes elektronisch mit dem Referenzbild zu vergleichen, indem man die Bildinformation des Referenzbildes vom Livebild subtrahiert, so dass im Differenzbild nur noch etwaige Abweichungen sichtbar sind.

Bei dem hier vorgeschlagenen Verfahren wird das Referenzbild aus dem digitalen Proof 10 gewonnen, und den Bildverzerrungen wird dadurch Rechnung getragen, dass das Livebild vor dem Vergleich mit dem Referenzbild entzerrt wird. Zu diesem Zweck werden schon vor Druckbeginn in dem digitalen Proof 10 bestimmte Referenzpunkte 12 ausgewählt. Dabei handelt es sich um markante Punkte der gedruckten Motive, die sich gut lokalisieren lassen, beispielsweise spitze Ecken oder Schnittpunkte oder Endpunkte oder Anfangspunkte von sehr scharfen Bildkonturen. Die Referenzpunkte 12 sollten im Idealfall eine Art Gitter definieren, das die gesamte Fläche des zu druckenden Bildes überzieht. Die Dichte der Referenzpunkte 12 kann vom Strukturreichtum des Bildes abhängig sein, so dass beispielsweise in Bildzonen, die sehr strukturarm und gleichförmig sind, ein gröberes Raster verwendet werden kann als in sehr strukturreichen Bildzonen. Wenn dann von der bedruckten Bahn ein Livebild aufgenommen wurde, beispielsweise das in Fig. 2 gezeigte Bild, so werden in diesem Livebild durch digitale Bildverarbeitung Referenzpunkte 12' identifiziert, die den Referenzpunkten 12 im Proof entsprechen, deren Position im Bild jedoch aufgrund der Bildverzerrungen etwas von der ursprünglichen Position der Referenzpunkte 12 abweicht. Anhand dieser Abweichungen wird dann eine Koordinatentransformation berechnet, die die Referenzpunkte 12' in ihre ursprünglichen Position zurückführt. Die gleiche Koordinatentransformation wird auch auf jedes Pixel des Livebildes angewandt, so dass das Bild entzerrt wird und die Motive a, b und c wieder ihre ursprüngliche Gestalt annehmen und dann mit dem Referenzbild, dem gerenderten Proof, verglichen werden können.

Die Auswahl und Definition der Referenzpunkte 12 im Proof 10 erfolgt elektronisch mit Hilfe eines Algorithmus, der die Bildinformation des Proofs analysiert. Die Koordinaten (x, y) jedes Referenzpunktes in einem Proof-Koordinatensystem 14 (Fig. 1) werden gemessen und gespeichert. Ergänzend kann zu jedem Referenzpunkt eine kleine Bilddatei gespeichert werden, die die nähere Umgebung des Referenzpunktes darstellt.

Im Livebild 10' ist ein Livebild-Koordinatensystem 14' so definiert, dass bei einem unverzerrten Bild alle Referenzpunkte die gleichen Koordinaten hätten wie im Proof. Da das Ausmaß der Bildverzerrung im allgemeinen klein ist, ermöglichen die bekannten Koordinaten (x, y) im Proof, das Suchgebiet einzugrenzen, innerhalb dessen im Livebild 10' nach dem betreffenden Referenzpunkt gesucht werden muss. Die genaue Lokalisierung des Referenzpunktes und die Bestimmung seiner Koordinaten (x', y') im Livebild-Koordinatensystem 14' erfolgt dann durch Vergleich der Umgebungs-Bilddatei des Referenzpunktes mit dem Bildinhalt des Livebildes.

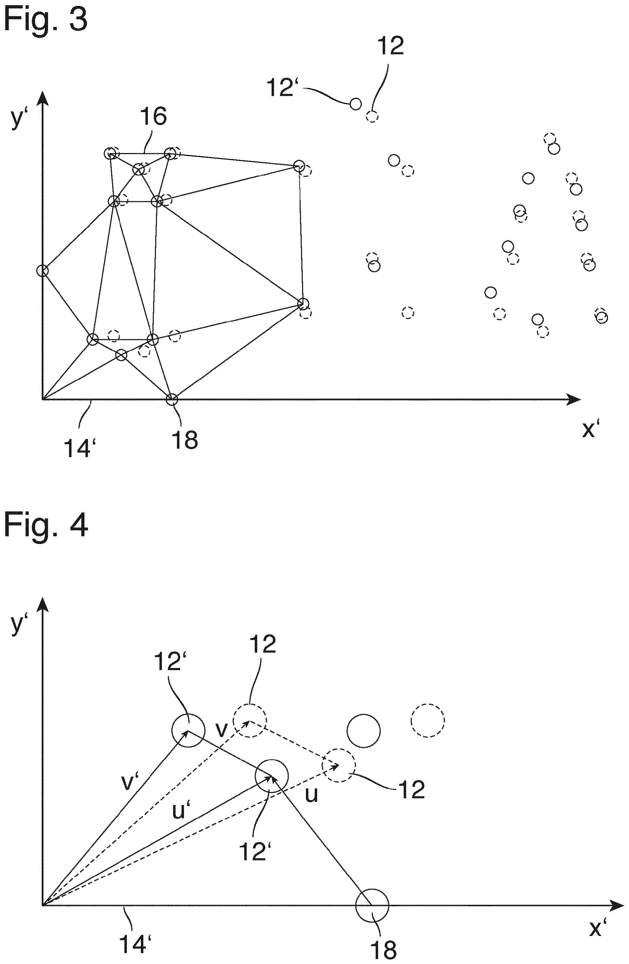

In Fig. 3 sind die im Livebild gefundenen Referenzpunkte 12' in durchgezogenen Linien und die zugehörigen Referenzpunkte 12 (übertragen ins Livebild-Koordinatensystem 14') gestrichelt dargestellt. Für die Berechnung der Koordinatentransformation zur Entzerrung des Bildes werden sämtliche Referenzpunkte 12' im Livebild durch ein Gitternetz 16 verbunden, das aus dreieckigen Flächenstücken besteht. In Fig. 3 ist nur ein Teil dieses Gitternetzes dargestellt. Auf dem Rand des Bildes sind zusätzliche Hilfspunkte 18 definiert, die es erlauben, die gesamte Bildfläche vollständig mit Dreiecksflächen des Gitternetzes zu bedecken.

Die Koordinatentransformation wird für jede dieser Dreieckflächen gesondert berechnet. In Fig. 4 ist dies am Beispiel einer Dreiecksfläche gezeigt, deren Ecken der Ursprung des Livebild-Koordinatensystems 14' sowie zwei Referenzpunkte 12' sind. Die Ortsvektoren der beiden Referenzpunkte 12' sind mit u' und v' bezeichnet. Gestrichelt eingezeichnet sind die Ortsvektoren u und v der zugehörigen Referenzpunkte 12 im Proof. Die Vektoren u und v können nun als Linearkombination der Vektoren u' und v' ausgedrückt werden:

$$u = t_{1,1}\ u' + t_{1,2}\ v'$$

$$v = t_{2,1}\ u' + t_{2,2}\ v'$$

Die Koordinaten $t_{1,1}$, $t_{2,2}$, .... bilden eine $2 \times 2$ Matrix T, die die Koordinatentransformation für dieses Dreieck definiert. Um das Bild innerhalb dieser Dreiecksfläche zu entzerren, wird nun die Koordinatentransformation auf jedes Pixel in der Dreiecksfläche angewandt, d. h., der Ortsvektor jedes Pixels wird mit der Matrix T multipliziert.

Auf die gleiche Weise verfährt man mit jeder Dreiecksfläche des Gitternetzes 16, das durch die Referenzpunkte 12' aufgespannt wird. In dem durch diese Transformation erhaltenen Bild stimmen die Orte sämtlicher Referenzpunkte exakt mit den Orten der ursprünglichen Referenzpunkte im Proof überein. Für den übrigen Bildinhalt gilt diese Übereinstimmung nur näherungsweise, da die Bildverzerrungen im allgemeinen nichtlinear sind und die hier benutzte Koordinatentransformation eine gebietsweise lineare Transformation ist. Die Übereinstimmung ist jedoch um so besser, je engmaschiger das Gitternetz 16 ist.

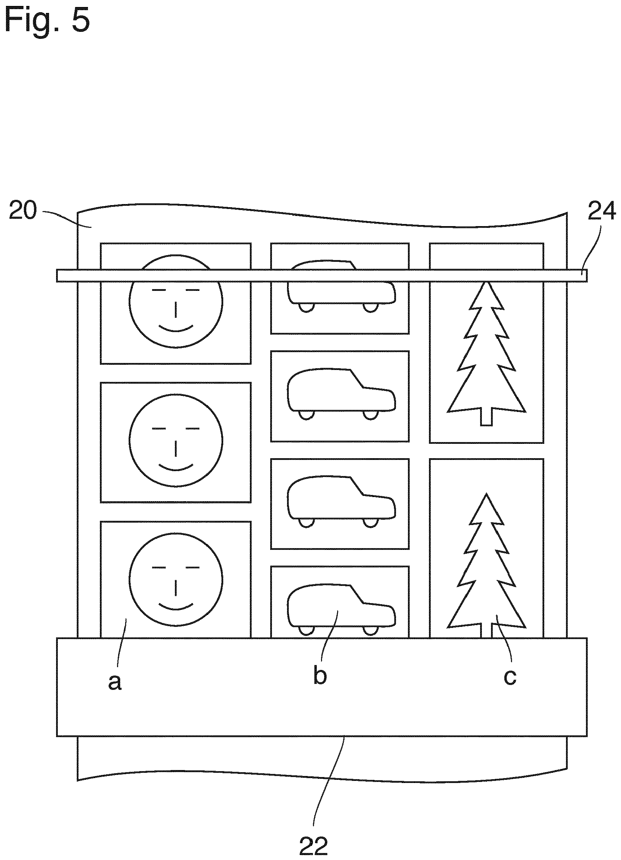

In Fig. 5 ist ein Abschnitt einer Bedruckstoffbahn 20 gezeigt, die unter einem Tintenstrahldruckkopf 22 hindurchläuft, der sich über die gesamte Bahnbreite erstreckt und mit dem die Motive a, b und c fortlaufend auf die Bedruckstoffbahn gedruckt werden. Weiter stromabwärts ist über der Bedruckstoffbahn eine Zeilenkamera 24 angeordnet, mit der die der Größe des Proofs 10 entsprechenden Livebilder nacheinander aufgenommen und nach Entzerrung mit den zugehörigen Referenzbildern verglichen werden.

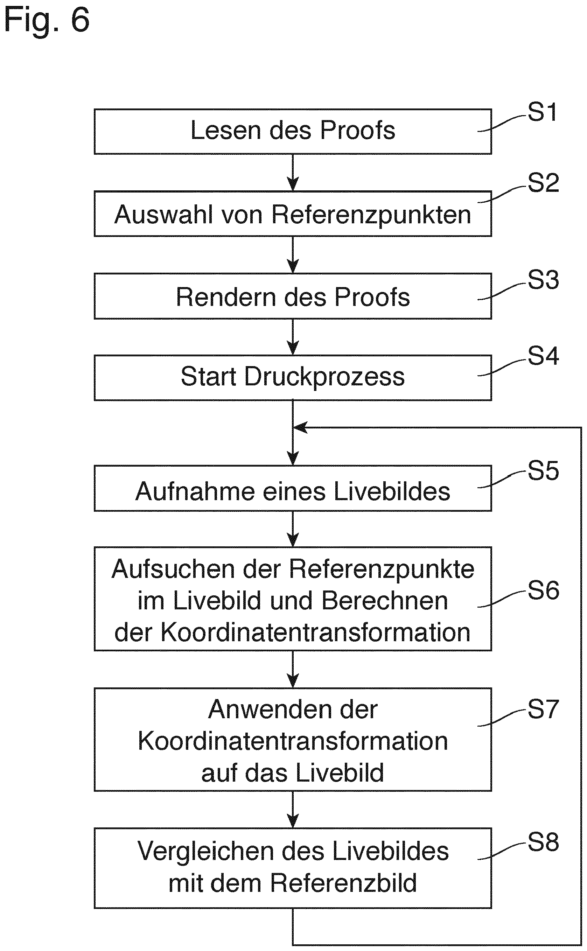

In Fig. 6 sind die wesentlichen Schritte des Inspektionsverfahrens in einem Flussdiagramm dargestellt. In Schritt S1 wird der digitale Proof 10 gelesen. In Schritt S2 werden die Referenzpunkte 12 ausgewählt. In Schritt S3 wird der Proof gerendert, um das Referenzbild zu erzeugen. Erst danach wird in Schritt S4 der Druckprozess gestartet. Die rechen- und zeitaufwändigen Schritte S2 und S3 sind somit bei Druckbeginn bereits abgeschlossen und können beispielsweise zu einer Zeit ausgeführt werden, zu der der Tintenstrahldruckkopf 22 noch mit einem anderen Druckauftrag beschäftigt ist.

Sobald der Tintenstrahldrucker 22 ein erstes Bild von der Größe des Proofs 10 gedruckt hat, wird in Schritt S5 mit der Zeilenkamera 24 ein erstes Livebild aufgenommen. In Schritt S6 werden in dem Livebild die Referenzpunkte 12' aufgesucht, und die Koordinatentransformation für die Entzerrung des Bildes wird berechnet (berechnen der Matrizen T für alle Dreiecksflächen). In Schritt S7 wird die Koordinatentransformation auf das gesamte Livebild angewandt, und schließlich wird in Schritt S8 das Ergebnis dieser Transformation mit dem Referenzbild verglichen. Danach erfolgt ein Rücksprung zu Schritt S5, wo das nächste Livebild aufgezeichnet wird. Die Schritte S5 - S8 werden dann zyklisch wiederholt, wobei aufgrund der in Fig. 1 gezeigten Anordnung der Motive in jedem Zyklus ein anderes Referenzbild benutzt werden muss. Allerdings ist die Auswahl der Referenzpunkte und die Berechnung des Referenzbildes für diese zusätzlichen Proofs weniger rechenaufwendig, da weitgehend auf die Ergebnisse zurückgegriffen werden kann, die man für den ersten Proof erhalten hat. Die den Schritten S1, S2 und S3 entsprechenden Schritte für jeden nachfolgenden Proof können deshalb wahlweise auch bei laufendem Druckprozess stattfinden, jeweils so rechtzeitig, dass die Ergebnisse bei der Aufnahme des zugehörigen Livebildes vorliegen.

**Patentansprüche**

1. Verfahren zur Druckbildinspektion in einem digitalen Druckprozess, bei dem Bilddaten von zu druckenden Bildern in einer Druckvorstufe in der Form eines digitalen Proofs (10) vorliegen, mit den Schritten:

   - Erzeugen eines Referenzbildes, das das gewünschte Druckergebnis repräsentiert,
   - Aufnehmen von digitalen Livebildern (10') von gedruckten Bildern, und
   - Vergleichen der Livebilder mit dem Referenzbild, **dadurch gekennzeichnet, dass** das Verfahren die weiteren Schritte aufweist:
   vor Druckbeginn:
   - Durchsuchen des digitalen Proofs (10) nach markanten Punkten in dem zu druckenden Bild,
   - Auswählen einer Anzahl solcher Punkte als Referenzpunkte (12) und Bestimmen von Koordinaten (x, y) der Referenzpunkte in einem Proof-Koordinatensystem (14),
   - Rendern des digitalen Proofs und Speichern des gerenderten Bildes als Referenzbild,
   nach Druckbeginn, für jedes Livebild:
   - Aufsuchen der Referenzpunkte (12') in dem Livebild (10'),
   - Berechnen einer Koordinatentransformation, die die Referenzpunkte (12, 12') des Livebildes und des Referenzbildes ineinander überführt, und
   - Vergleichen des Livebildes (10') mit dem Referenzbild nach Anwendung der Koordinatentransformation.

2. Verfahren nach Anspruch 1, bei dem die Koordinatentransformation eine stückweise lineare Transformation ist.

3. Verfahren nach Anspruch 1 oder 2, bei dem die Koordinatentransformation auf das Livebild (10') angewandt wird und das Ergebnis der Transformation mit dem Referenzbild verglichen wird.

4. Verfahren nach einem der vorstehenden Ansprüche, bei dem der Proof (10) mehrere Motive (a, b, c) enthält, die in mehreren parallelen Spuren auf eine Bedruckstoffbahn (20) zu drucken sind.

5. Verfahren nach Anspruch 4, bei dem der Proof (10) Bildinformation für eine Bildzone enthält, die sich über die gesamte Breite der Bedruckstoffbahn (20) erstreckt.

6. Verfahren nach Anspruch 4 oder 5, bei dem die Motive (a, b, c) sich in ihrem Repeat unterscheiden und so in der Bildzone angeordnet sind, dass der Proof ajedes Motive mindestens einmal vollständig enthält.

7. Verfahren nach Anspruch 6, bei dem der Bildinhalt des Proofs (10) einen Abschnitt der Bedruckstoffbahn (20) mit sich periodisch wiederholendem Druckbild repräsentiert.

Fig. 1

Fig. 2

## Fig. 3

## Fig. 4

Fig. 5

# Fig. 6

| | |
|---|---|
| Lesen des Proofs | S1 |
| ↓ | |
| Auswahl von Referenzpunkten | S2 |
| ↓ | |
| Rendern des Proofs | S3 |
| ↓ | |
| Start Druckprozess | S4 |
| ↓ | |
| Aufnahme eines Livebildes | S5 |
| ↓ | |
| Aufsuchen der Referenzpunkte im Livebild und Berechnen der Koordinatentransformation | S6 |
| ↓ | |
| Anwenden der Koordinatentransformation auf das Livebild | S7 |
| ↓ | |
| Vergleichen des Livebildes mit dem Referenzbild | S8 |

**EP 4 169 720 A1**

Europäisches Patentamt
European Patent Office
Office européen des brevets

# EUROPÄISCHER RECHERCHENBERICHT

Nummer der Anmeldung

**EP 21 20 4388**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 656 561 A1 (HEIDELBERGER DRUCKMASCH AG [DE]) 27. Mai 2020 (2020-05-27) | 1-3 | INV. B41F33/00 G06T7/00 G06T7/33 |
| Y | * Abbildungen 1-9 * <br> * Absätze [0021] - [0033] * <br> ----- | 4-7 | |
| X | DE 10 2010 049945 A1 (HEIDELBERGER DRUCKMASCH AG [DE]) 26. Mai 2011 (2011-05-26) | 1-3 | |
| Y | * Abbildungen 1-7 * <br> * Absätze [0042] - [0055] * <br> ----- | 4-7 | |
| Y,D | EP 2 700 505 B1 (BST ELTROMAT INT GMBH [DE]) 21. Dezember 2016 (2016-12-21) * Abbildung 2 * * Absätze [0025] - [0034] * ----- | 4-7 | |

|  | RECHERCHIERTE SACHGEBIETE (IPC) |
|---|---|
|  | B41F G06T |

Der vorliegende Recherchenbericht wurde für alle Patentansprüche erstellt

| Recherchenort | Abschlußdatum der Recherche | Prüfer |
|---|---|---|
| München | 6. April 2022 | Hajji, Mohamed-Karim |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................................
& : Mitglied der gleichen Patentfamilie, übereinstimmendes Dokument

EPO FORM 1503 03.82 (P04C03)

10

**ANHANG ZUM EUROPÄISCHEN RECHERCHENBERICHT
ÜBER DIE EUROPÄISCHE PATENTANMELDUNG NR.**

EP 21 20 4388

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-04-2022

| Im Recherchenbericht angeführtes Patentdokument | Datum der Veröffentlichung | Mitglied(er) der Patentfamilie | Datum der Veröffentlichung |
|---|---|---|---|
| EP 3656561 A1 | 27-05-2020 | CN 111300983 A | 19-06-2020 |
| | | DE 102018220236 A1 | 28-05-2020 |
| | | EP 3656561 A1 | 27-05-2020 |
| | | JP 2020087473 A | 04-06-2020 |
| | | US 2020169641 A1 | 28-05-2020 |
| DE 102010049945 A1 | 26-05-2011 | KEINE | |
| EP 2700505 B1 | 21-12-2016 | DE 102012106981 A1 | 06-02-2014 |
| | | EP 2700505 A2 | 26-02-2014 |
| | | ES 2616531 T3 | 13-06-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2700505 B1